# EUROPEAN PATENT SPECIFICATION

(11) **EP 3 582 352 B1**
(45) Date of publication and mention of the grant of the patent: **16.02.2022**
(21) Application number: 19180223.0
(22) Date of filing: 14.06.2019
(51) Int. Cl.: H02G 9/10, H02B 1/30, H02B 1/50, E02D 27/42

(54) **ELECTRIC INSTALLATION CABINET**
ELEKTROINSTALLATIONSSCHRANK
ARMOIRE D'INSTALLATION ÉLECTRIQUE

(30) Priority: 15.06.2018 DK PA201870405
(43) Date of publication of application: 18.12.2019
(73) Proprietor: Triarca A/S, 8783 Hornsyld (DK)
(72) Inventor: CHRISTIANSEN, Henning, 8700 Horsens (DK)
(74) Representative: Patrade A/S

(56) References cited:
- CA-A- 1 082 620
- DE-A1-102014 003 038
- US-A1- 2009 147 483

## Description

### Field of the Invention

The present invention relates to an electric installation cabinet also referred to as enclosures for installation of electric cables typically in an outside environment area, but also indoor.

### Background of the Invention

The installation of data cables and power cables into electric installation cabinets, where the electric installation cabinet is located in an outside environment area is well known.

Electric installation cabinets are often mounted on a foundation, which is placed in the ground. The cabling is lead from the ground and into the cabinet through a narrow cable entry located in the foundation. To handle the electric cables by leading the electric cables from the ground and into the cabinet through a narrow cable entry is often complicated, hard and/or difficult.

The document DE19524103A describes a hollow column/cabinet for mounting electrical measurement and control components e.g. for sewage- and chemical plants, and pumping stations. Several elements fit together with tongue-groove connectors and screws in corners, plus detachable foot-plate and lid. The cabling is led from the ground and into the hollow column/cabinet through a narrow cable entry located in the bottom of the column/cabinet. The teaching from this document illustrates the complexity of assembling and disassembling of for example cables. To handle the electric cables by leading the electric cables from the ground and into the cabinet through a narrow cable entry is also in the example complicated, hard and/or difficult.

The document DE 9010988 U1 describes a device for fixating power cables in a cable distribution cabinet. The cable distribution cabinet has a cable insertion opening, where the cables are led into the cabinet. The electrical cables are led from the surroundings, for example from the ground, and into the cabinet through a wide cable entry. After installing the electrical cables, the cables are left unprotected from hazard and the surrounding environment.

The document US 2009/147483 discloses a cabinet for outdoor area comprises a cabinet mounted on a bottom box, and where the bottom box is resting on two foundation structures, arrange on opposite sides of the bottom box. The bottom box is provided with an aperture arranged through the bottom box, so a first end of a cable is capable of being led from the ground, through the bottom box, and into the cabinet. The person skilled in the art would immediately recognize the difficulty in installing cables in the cabinet, when the cables is already in the ground, and the cables is stiff and therefore difficult to bend. It will require an effort to lead the end of the electric cable from below the bottom box, upwards through the aperture for cable entry and into the cabinet. It is very difficult to manoeuvre the cables, and it takes therefore a lot of time to install the cables. Furthermore, there is a huge risk of damaging the cables in the installation process.

The electric cables are often not very flexible and very difficult to maneuver/handle, especially through narrow cable entries. The repair and maintenance is also complicated because the access to the electric cables is difficult. Moving and/or clipping and cutting the electric cables are not easy because the electric cables are not very flexible and the electric cable entry is narrow, and furthermore the foundation is in the electric cables' way of handling the electric cables easily. The cabling, repair and maintenance are therefore time consuming and costly.

### Object of the Invention

The object of the invention is to provide an electric installation cabinet for storage of equipment and protection of electric cable intersection terminals with an improved handling of cables, when inserting and installing electric cables into the cabinet in an outdoor environment.

### Description of the Invention

The invention is an electric installation cabinet for an outdoor area, according to claim 1, comprising a bottom plate, a cabinet and a foundation structure, where said bottom plate is provided in a first area with at least one aperture for cable entry into said cabinet, and means for attaching/mounting said cabinet, where the bottom plate in said first area has an Omega shape, allowing cable entry into said at least one aperture through an opening path in the Omega shaped bottom plate in said first area of the bottom plate, and where in a second area different from said first area means for mounting said bottom plate to said foundation structure is provided, and where said second area is not covered by said cabinet.

The cabinet provides both an aperture for cable entry and means for attachment in the bottom plate. The size of the aperture for cable entry may depend on the numbers and/or dimension of the electric cables to be introduced into the cabinet. Generally the aperture may be as large as the bottom plate allows without causing an unstable attachment to the cabinet.

In this connection the term "Omega shape" shall be understood as a plate or part of a plate member having a large aperture, and a relatively small open channel connecting the aperture to a free edge of the plate, such that for example a relatively stiff cable may be passed with its longitudinal axis substantially orthogonal to the plane of the plate through the channel into the aperture.

The cabinet may be elongated in a predetermined distance from the level of the electric cables led in the ground. The electric cables may be led from the ground, bent upwards and into the cabinet through the aperture for cable entry in the bottom plate, where the electric cables may be connected to electric cable terminals. The foundation structure, on which the cabinet is arranged, is located behind or to the side of the cabinet, and therefore provides a free passage for the cabling to, from and in the cabinet.

First the end of the electric cable is led through the aperture for cable entry, and guided upwards to the electric cable terminals, where the electric cable may be connected in a predetermined setting.

The electric cables are easily handled due to the free passage of the aperture for cable entry in the bottom plate, when the electric cables are led into the cabinet. This also applies for other types of cables, for example installation of fiber cables or gas cables etc. This will reduce both time and costs of the implementation process, because the cabling is not complicated and/or difficult.

The electric cables may be led from the ground, into the inner volume of said cabinet through the opening path provided in the Omega shaped bottom plate in said first area of the bottom plate of said cabinet. The electric cables may easily be inserted laterally through the opening path, from the outside of the bottom plate into the Omega shaped aperture in the first area of the bottom plate. The Omega shaped aperture may be squarish or more oval. The form may provide a resting grip on each inner side on each side of the the opening path. When the cables are led into the aperture, the cables may rest on the inner sides preventing the cables from slipping out during the installation. The electric cables may be stiff and therefore difficult to bend. It will require an effort to lead the end of the electric cable from below the bottom plate upwards through the aperture for cable entry and into the cabinet. Instead of leading the electric cable through the aperture for cable entry from below the bottom plate and into the cabinet, the end of the electric cable may be placed directly into the cabinet, by moving the electric cable laterally through the opening path and arranging the electric cable in the aperture for cable entry. The electric cables may be rested on one and/or the other side of the opening path in the aperture for cable entry. The end of the electric cable may then be connected to the electric cable terminals or connectors inside the cabinet, without the electric cables being distorted, damaged or otherwise mishandled.

In a further advantageous embodiment of the invention, at least one flange is provided on said bottom plate in said first area for attaching/mounting said cabinet.

The bottom plate is attached to a cabinet, by providing one or more flange in the first area on the bottom plate, e.g. perpendicular to the bottom plate, so the side of the flange is adjacent to one or more of the sides of the cabinet. The flange side and the side of the cabinet may be parallel and may be attached to one another using screws, bolts or rivets.

In a still further advantageous embodiment of the invention, at least one assembling aperture is provided in said second area for mounting said bottom plate to said foundation structure.

The second area is arranged outside the cabinet, preferably on the back side of the cabinet. An assembling aperture may be provided, so that a part of the foundation structure is arranged inside and/or through the assembling aperture. According to the invention, the cabinet is arranged in an offset position to the foundation structure, providing an easily and agile working access to the bottom plate.

In a further advantageous embodiment of the invention, said bottom plates second area is extending in an angle within ±90° in relation to said bottom plates first area.

The cabinet 1 may be arranged in a lateral position from the foundation structure. Depending on the cabinet attachment to the foundation structure, the bottom plate's second area may be bended in a predetermined angle in relation to the first area. For example if the cabinet should be attached to the top of the structure, there will be not need to bend the second area in relation to the first area. The second area is then parallel extending from the first area, which equals an offset of 0°. If the cabinet should be attached to a vertical side of the structure, the second area is bent in relation to the first area. The second area is then perpendicular extending from the first area, which equals an offset of +90° or - 90°. The second area will then be arranged parallel to the foundation structure and the cabinet will be arranged in a laterally position in relation to the foundation structure. This makes it possible to arrange the cabinet in a correct position to any given foundation structure.

In a still further advantageous embodiment of the invention, said foundation structure is a pile.

The cabinet may be arranged on a pile, when placed in an open environment. Then the cabinet will be accessible from all directions. The cabinet may also be arranged on or to another foundation structure, e.g. a wall or a foundation of a building.

In a further advantageous embodiment of the invention, said cabinet is provided with a lower shield, arranged so said lower shield extends along said cabinet and beyond said bottom plate in a direction towards the ground, when the cabinet and the lower shield are in use.

The lower shield may have a shape similar to the outline of the cabinet or a shape depending on the sizes and numbers of electric cables attached to the cabinet. After arranging the electric cables inside the cabinet one or more lower shields may be attached to the cabinet. The lower shield may protect the electric cables, when being arranged in the cabinet. The lower shield may be attached to the cabinet using screws, bolts and/or rivets or snap locks. When the cabinet is in use, the lower shield may extend from the cabinet towards the ground, and may even extend into the ground.

The invention further relates to a method for introducing electric cables into an electric installation cabinet in an outdoor environment, comprising the steps defined in claim 7.

The provided method causes the cabinet to be elongated in a predetermined distance providing an easy handling of the electric cables, which are led in the ground and into the cabinet. The cabinet is attached in an offset position relative to the foundation structure, which is located behind or on the side of the cabinet, leaving an open access to the bottom plate. The electric cables may bend upwards and into the cabinet through the aperture for cable entry provided in the bottom plate. When leading the first the end of the electric cable through the aperture for cable entry, the electric cable is guided upwards to the electric cable terminals, where the electric cable may be connected in a predetermined setting.

According to the invention, leading at least one electric cable from the ground, into the inner volume of said cabinet through the opening path provided in the Omega shaped bottom plate in said first area of the bottom plate of said cabinet. The electric cables may easily be inserted laterally through the opening path, from the outside of the bottom plate into the Omega shaped aperture in the first area of the bottom plate.

The electric cables may be arranged in a static position from the ground and into the cabinet, when the cabinet is arranged on a foundation structure. When handling the electric cables, the opening path in the Omega shaped bottom plate in the cabinet, provides an open access with easy cabling and also an easy access when handling repair and maintenance of the electric cables.

In a still further advantageous embodiment of the invention, providing said cabinet with a lower shield, extending said lower shield along said cabinet, beyond the bottom plate in direction towards the ground, when the cabinet is in use and the lower shield providing an entry protection of said electric cables.

The electric cables may have an extra protection provided at the entrance to the cabinet by one or more lower shields, when the electric cables are in use. The lower shield may easily be attached to and removed from the cabinet, using screws, bolts and/or rivets or being clipped. The lower shield may extend towards the ground and may even extend into the ground and therefore protects the electric cables against impact and weather condition from the outside environment.

By using this method, time and costs of the installation process of a cabinet of this type will be reduced. The cabling is not hard, complicated and/or in any way difficult and therefore easy to handle, also during repair and maintenance on site.

### Description of the Drawing

Fig. 1 shows an embodiment of an electric installation cabinet.
Fig. 2 shows an embodiment of a bottom plate.
Fig. 3 shows the electrical installation cabinet attached to a structure.
Fig. 4a and fig. 4.b shows the electrical installation cabinet being attached to foundation structure.
Fig. 5 shows the arrangement of cabinets in relation to an open ground channel

### Detailed Description of the Invention

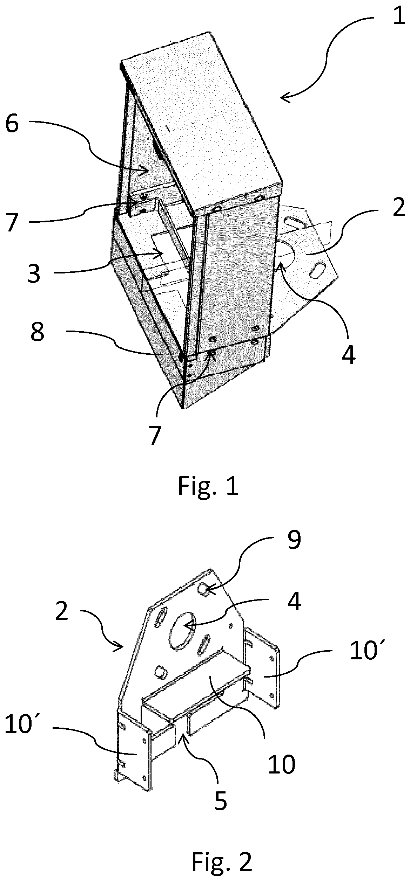

Fig. 1 shows an embodiment of an electric installation cabinet 1, which may be provided for an outdoor area. The cabinet 1 comprises a bottom plate 2. The bottom plate 2 is provided with an aperture for cable entry 3 and an assembling aperture 4 fitted for entering a structure part of a structure, e.g. a pile. The cabinet 1 has an opening 6 on the front side, so the wiring installation inside the volume of the cabinet 1 is accessible for installation and maintenance of the electric cables.

The cabinet 1 is provided with fastening means 7, e.g. bolts, rivets and/or screws, for assembling the bottom plate 2 and the lower shield 8 to the bottom part of the cabinet 1. The cables may be divided into alternative sections inside the cabinet 1, by using cable support hinges, clamps or straps etc.

The bottom plate 2 extends from said cabinet 1in this example on the opposite side of the electric installation cabinet's 1 opening 6. The aperture for cable entry 3 is provided with an opening path between the inner volume of the cabinet 1 and the ambient surroundings. The area of aperture 3 may be substantially equal to the first area.

The bottom plate 2 extends perpendicularly from the back side of the cabinet 1, providing the assembling aperture 4 in the bottom plate 2 outside the electric installation cabinets 1. The assembling of the cabinet 1 to a structure is performed by fastening to a structure using the assembling aperture 4 and assembling means, e.g. bolts, screws and/or rivets, when fastening the bottom plate 2 to the structure.

Fig. 2 shows an embodiment of a bottom plate 2. The bottom plate 2 is provided with assembly frames 10, 10'. The assembly frames 10, 10' are provided on the said bottom plate 2, so the bottom plate 2 is easily attached to the sides and back side of the cabinet 1 by using one fastening means, such as e.g. bolts, screws and/or rivets.

The aperture for cable entry 3 is provided on one side of the bottom plate 2 in relation to the assembly frame 10, and the assembling aperture 4 is provided on the other side of the assembly frame. The bottom plate 2 may also be provided with assembling apertures 9 for fastening the bottom plate 2 to a foundation structure by using assembling means, such as bolts.

The aperture for cable entry is provided with an opening path 5 to the ambient surroundings. The electric cables is led from the surroundings, into the inner volume of said cabinet through the opening path 5 provided in the Omega shaped bottom plate 2 in said first area. The electric cables are inserted laterally through the opening path 5, from the outside of the bottom plate 2 into the Omega shaped aperture in the first area of the bottom plate 2. The Omega shaped aperture is in this example more squarish. The bottom plate 2 is providing a resting grip on the left and/or on the right of the inner side next to the opening path 5. When the cables are led into the aperture, the cables easily rest on the inner sides preventing the cables from slipping out during the installation. The opening path 5 may be as wide or partly as wide as the aperture provided in the first area of the bottom plate 2.

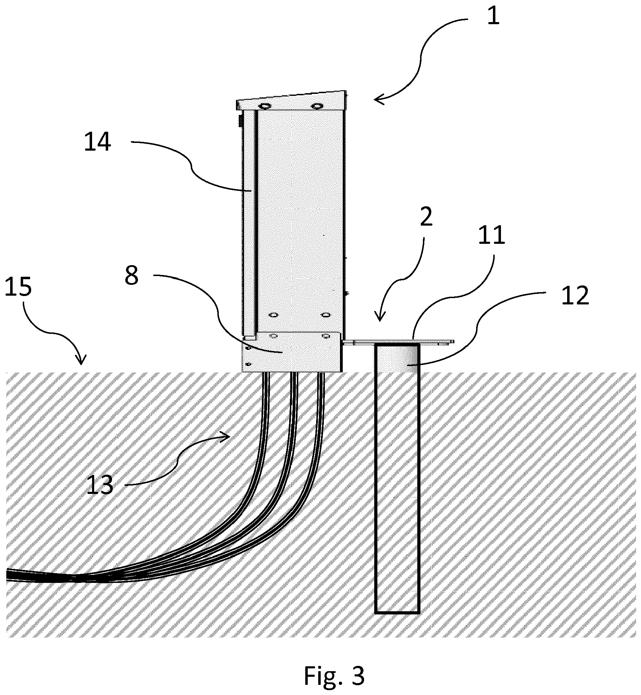

Fig. 3 shows the electrical installation cabinet 1 attached to a foundation structure 12. The foundation structure 12 may be a pile or a foundation, made of concrete, metal and/or plastic. The foundation structure 12 is arranged in the ground 15. The assembling aperture 4, showed in fig. 2, provided in the bottom plate 2 extends from the back side of the cabinet 1. The top structure part 11 of the foundation structure 12 is arranged so that the top structure part 11 fits into the assembling aperture 4, and attached to the bottom plate 2 using structure assembling means, such as bolts or screws.

The foundation structure 12 extends in the opposite direction of the cabinet 1 in relation to the top structure part 11. The foundation structure 12 may also be arranged in continuation of or in displacement in relation to the cabinet 1, providing a free space underneath the cabinet 1. The free space provides an easy access for the electric cables 13 to be lead into the cabinet 1 through the aperture for cable entry provided in the first area of the bottom plate 2.

The cabinet 1 may be waterproof and may have to be isolated electrically from the ground. This may be provided by isolating the cabinet 1 from the foundation structure 12 by providing isolating assembling means or isolation plates. The cabinet 1 and/or the foundation structure 12 may also be of non-conductive material. The opening on the front side of the cabinet 1 is covered by a cabinet door 14 protecting the electric installations inside.

The cabinet 1 is provided with a lower shield 8 extending from the bottom part of cabinet 1 passing the bottom plate, and extending beyond the bottom plate in the direction of the electric cables 13, towards and/or into the ground. The lower shield 8 may be attached to the cabinet 1 after the electric cables 13 are introduced into the cabinet 1.

Three electric cables 13 are led from the ground, upwards and through the aperture for cable entry placed behind the shield 8 into the cabinet 1, where the electric cables are installed. The electric cables 13 are protected against impact, constant pressure from the soil and weather condition by the lower shield 8, when the electric cables 13 is implemented in the cabinet 1 and being in use.

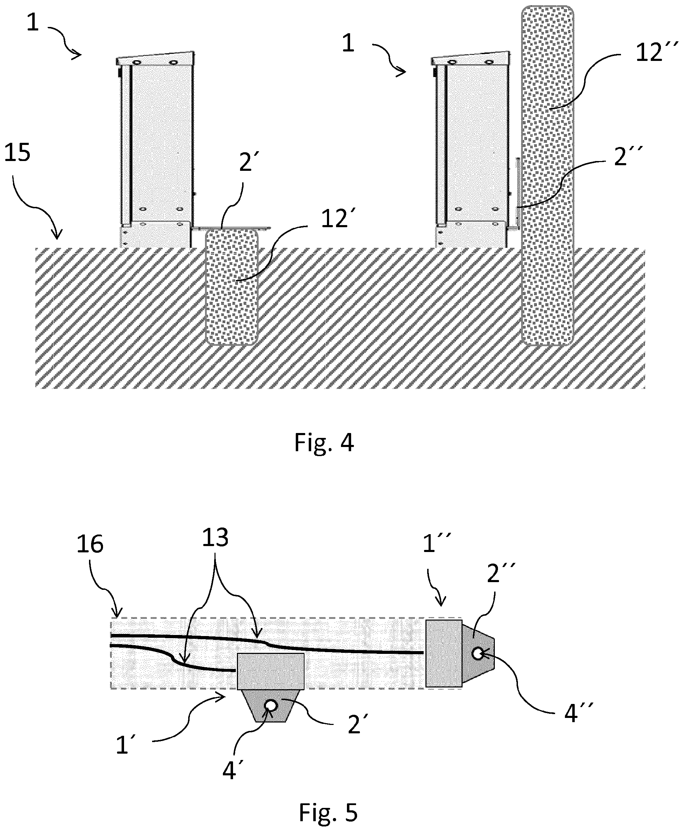

Fig. 4a and fig. 4.b shows the cabinet 1 being attached to a foundation structure given different attachment positions. The structure is arranged in the soil where the cable are located. The part of the bottom plate 2, which extends from the cabinet 1, may be bended in an angle, preferable within the limit of ±90°.

In fig. 4a the cabinet 1 has a bottom plate 2, where the bottom plate 2 is extending from the cabinet 1, equals an offset of 0°, and is attached on top of a foundation structure 12'using attachments means. The cabinet 1 is displaced from the foundation structure 12', leveeing the bottom of the cabinet 1 with a free and open access from the ground and into the cabinet 1.

In fig. 4b the cabinet 1 has a bottom plate 2, where part of the bottom plate 2 is bended, so the part of the bottom plate 2" extends in a direction along the backside of the cabinet 1, which equals an offset of +90°. The part of the bottom plate is adjacent foundation structure 12" and attached to the side of a foundation structure 12" using attachment means. The cabinet 1 is displaced from the foundation structure 12", leveeing the bottom of the cabinet 1 with a free and open access from the ground and into the cabinet 1.

Fig. 5 shows the arrangement of cabinets in relation to an open ground channel 16, where two cables 13 are located. The cables are led to respectively a first and a second cabinet 1',1".

The first cabinet 1' is arranged so the bottom plate 2' is attached to a foundation structure using assembling aperture 4' and attachment means. The foundation structure is located next to the one side of the ground channel 16. The cabinet 1' is arranged so that the part of the bottom plate 2' inside the cabinet 1' comprising the aperture for cable entry, which is located over the cable channel 16, providing the cable 13 a free path from the ground and into the cabinet 1'.

The second cabinet 1" is arranged so the bottom plate 2" is attached to a foundation structure using assembling aperture 4" and attachment means. The foundation structure is located next to the end of the ground channel 16. The part of the bottom plate 2" inside the cabinet 1" comprising the aperture for cable entry. The cabinet 1" is located over the cable channel 16, providing the cable 13 a free path from the ground and into the cabinet 1" through the aperture for cable entry.

The bottom plate 2 provided on the cabinet 1may be attached to the top of the foundation structure 12, but might as well be attached on the side the structure, e.g. extending and bending the bottom plate 2 accordantly with in a predefined offset position.

## Claims

1. Electric installation cabinet for an outdoor area comprising a bottom plate (2), a cabinet (1) and a foundation structure (12), wherein said bottom plate (2) is provided with a first area and a second area, wherein said first area has an aperture (3) for cable entry into said cabinet (1), and fastening means (7) for attaching and mounting said cabinet (1), where the bottom plate (2) in said first area has an opening path (5) which connects said aperture to a free edge of the plate allowing cable entry into said aperture (3) through said opening path (5) in said first area of the bottom plate (2), such that a cable is passed with its longitudinal axis substantially orthogonal to a plane of the bottom plate (2) through the opening path (5) into the aperture (3), wherein said second area is different from said first area, and said second area is provided with means (9) for mounting said bottom plate (2) to said foundation structure (12), and where said second area is not covered by said cabinet (1), and said cabinet (1) is arranged in an offset position to the foundation structure (12).

2. Electric installation cabinet according to claim 1, wherein at least one flange is provided on said bottom plate (2) in said first area for attaching and mounting said cabinet (1).

3. Electric installation cabinet according to claims 1 or 2, wherein at least one assembling aperture (4) is provided in said second area for mounting said bottom plate (2) to said foundation structure (12).

4. Electric installation cabinet according to any of the preceding claims, wherein said bottom plate's (2) second area is extending in an angle within ±90° in relation to said plane of said bottom plate's (2) first area.

5. Electric installation cabinet according to any of the preceding claims, wherein said foundation structure (12) is a pile.

6. Electric installation cabinet according to any of the preceding claims, wherein said cabinet (1) is provided with a lower shield (8), arranged so said lower shield (8) extends along said cabinet and beyond said bottom plate (2) in a direction towards the ground, when said cabinet (1) and the lower shield (8) are in use.

7. Method for introducing electric cables into an electric installation cabinet in an outdoor environment, wherein the method comprises the following steps:
- providing a cabinet (1) with an inner volume and an opening (6) on a front side with access to the inner volume, and providing a bottom plate (2) with a first area and a second area with an aperture (3) for cable entry in said first area, where the bottom plate (2) in said first area has an opening path (5) connecting the aperture to a free edge of the plate, allowing cable (13) entry into said aperture (3) through said opening path (5) in said first area of the bottom plate (5), such that a relatively stiff cable is passed with its longitudinal axis substantially orthogonal to a plane of the bottom plate (2) through the opening path (5) into the aperture (3), and said second area is provided with means (7) for attaching/mounting said cabinet (1) to a foundation structure (12), and providing said foundation structure (12) with means (9) for mounting said bottom plate (2) to said foundation structure (12),
- assembling said first area of said bottom plate (2) to said cabinet (1) using fastening means (7) for attaching and mounting, where said first area is covered by said cabinet (1), and providing said second area that is not covered by said cabinet (1), and mounting said second area of said bottom plate (2) to said foundation structure (12) using means (9) for attaching and mounting, such that said cabinet (1) is arranged in an offset position to the foundation structure (12),
- leading at least one end of an electric cable (13) from the ground, upwards and through said aperture (3) for cable entry provided in said first area of the bottom plate (2), such that the electric cable (13) is inserted laterally through the opening path on outside of the bottom plate (2) and into the inner volume of said cabinet (1).

8. Method for introducing electric cables into an electric installation cabinet according to claim 7 , providing said cabinet (1) with a lower shield (8), extending said lower shield (8) along said cabinet (1), beyond the bottom plate (2) in direction towards the ground, when the cabinet (1) is in use and the lower shield (8) is providing an entry protection of said electric cables (13).

## Patentansprüche

1. Elektroinstallationsschrank für einen Outdoorbereich, umfassend eine Bodenplatte (2), einen Schrank (1) und eine Fundamentstruktur (12), wobei die Bodenplatte (2) mit einem ersten Bereich und einem zweiten Bereich versehen ist, wobei der erste Bereich eine Aussparung (3) für einen Kabeleingang in den Schrank (1) und Befestigungsmittel (7) zum Anbringen und Montieren des Schranks (1) aufweist, wobei die Bodenplatte (2) in dem ersten Bereich einen Öffnungspfad (5) aufweist, der die Aussparung mit einer freien Kante der Platte verbindet, um den Kabeleingang in die Aussparung (3) durch den Öffnungspfad (5) in dem ersten Bereich der Bodenplatte (2) zu ermöglichen, sodass ein Kabel mit seiner Längsachse im Wesentlichen orthogonal zu einer Ebene der Bodenplatte (2) durch den Öffnungspfad (5) in die Aussparung (3) geführt wird, wobei sich der zweite Bereich von dem ersten Bereich unterscheidet und wobei der zweite Bereich mit Mitteln (9) zum Montieren der Bodenplatte (2) an der Fundamentstruktur (12) versehen ist und wobei der zweite Bereich nicht durch den Schrank (1) bedeckt ist und der Schrank (1) in einer versetzten Position zu der Fundamentstruktur (12) angeordnet ist.

2. Elektroinstallationsschrank nach Anspruch 1, wobei mindestens ein Flansch an der Bodenplatte (2) in dem ersten Bereich zum Anbringen und Montieren des Schranks (1) bereitgestellt ist.

3. Elektroinstallationsschrank nach Ansprüchen 1 oder 2, wobei mindestens eine Montageaussparung (4) in dem zweiten Bereich zum Montieren der Bodenplatte (2) an der Fundamentstruktur (12) bereitgestellt ist.

4. Elektroinstallationsschrank nach einem der vorstehenden Ansprüche, wobei sich der zweite Bereich der Bodenplatte (2) in einem Winkel innerhalb von ±90 ° in Bezug auf die Ebene des ersten Bereichs der Bodenplatte (2) erstreckt.

5. Elektroinstallationsschrank nach einem der vorstehenden Ansprüche, wobei die Fundamentstruktur (12) ein Pfahl ist.

6. Elektroinstallationsschrank nach einem der vorstehenden Ansprüche, wobei der Schrank (1) mit einer unteren Abschirmung (8) versehen ist, die so angeordnet ist, dass sich die untere Abschirmung (8) entlang des Schranks und über die Bodenplatte (2) hinaus in einer Richtung zum Boden erstreckt, wenn der Schrank (1) und die untere Abschirmung (8) im Einsatz sind.

7. Verfahren zum Einführen von Elektrokabeln in einen Elektroinstallationsschrank in einer Outdoorumgebung, wobei das Verfahren die folgenden Schritte umfasst:
- Bereitstellen eines Schranks (1) mit einem Innenvolumen und einer Öffnung (6) an einer Vorderseite mit Zugang zu dem Innenvolumen und Bereitstellen einer Bodenplatte (2) mit einem ersten Bereich und einem zweiten Bereich mit einer Aussparung (3) für einen Kabeleingang in dem ersten Bereich, wobei die Bodenplatte (2) in dem ersten Bereich einen Öffnungspfad (5) aufweist, der die Aussparung mit einer freien Kante der Platte verbindet, um einen Eingang eines Kabels (13) in die Aussparung (3) durch den Öffnungspfad (5) in dem ersten Bereich der Bodenplatte (5) zu ermöglichen, sodass ein relativ steifes Kabel mit seiner Längsachse im Wesentlichen orthogonal zu einer Ebene der Bodenplatte (2) durch den Öffnungspfad (5) in die Aussparung (3) geführt wird, und wobei der zweite Bereich mit Mitteln (7) zum Anbringen/Montieren des Schranks (1) an einer Fundamentstruktur (12) versehen ist, und Bereitstellen der Fundamentstruktur (12) mit Mitteln (9) zum Montieren der Bodenplatte (2) an der Fundamentstruktur (12),
- Zusammenbauen des ersten Bereichs der Bodenplatte (2) mit dem Schrank (1) unter Verwendung der Befestigungsmittel (7) zum Anbringen und Montieren, wobei der erste Bereich durch den Schrank (1) bedeckt ist, und Bereitstellen des zweiten Bereichs, der nicht durch den Schrank (1) bedeckt ist, und Montieren des zweiten Bereichs der Bodenplatte (2) an die Fundamentstruktur (12) unter Verwendung der Mittel (9) zum Befestigen und Montieren, sodass der Schrank (1) in einer versetzten Position zu der Fundamentstruktur (12) angeordnet ist,
- Führen mindestens eines Endes eines elektrischen Kabels (13) von dem Boden nach oben und durch die Aussparung (3) für einen Kabeleingang, der in dem ersten Bereich der Bodenplatte (2) bereitgestellt ist, sodass das elektrische Kabel (13) seitlich durch den Öffnungspfad auf der Außenseite der Bodenplatte (2) und in das Innenvolumen des Schranks (1) eingesetzt wird.

8. Verfahren zum Einführen von elektrischen Kabeln in einen Elektroinstallationsschrank nach Anspruch 7, Bereitstellen des Schranks (1) mit einer unteren Abschirmung (8), Erstrecken der unteren Abschirmung (8) entlang des Schranks (1) über die Bodenplatte (2) hinaus in Richtung zum Boden, wenn der Schrank (1) im Einsatz ist und die untere Abschirmung (8) einen Eingangsschutz der elektrischen Kabel (13) bereitstellt.

## Revendications

1. Armoire d'installation électrique pour une zone extérieure comprenant une plaque inférieure (2), une armoire (1) et une structure de fondation (12), dans laquelle ladite plaque inférieure (2) est pourvue d'une première zone et d'une seconde zone, dans laquelle ladite première zone a une ouverture (3) pour une entrée de câble dans ladite armoire (1), et un moyen de fixation (7) pour fixer et monter ladite armoire (1), où la plaque inférieure (2) dans ladite première zone a un chemin d'ouverture (5) qui relie ladite ouverture à un bord libre de la plaque permettant une entrée de câble dans ladite ouverture (3) à travers ledit chemin d'ouverture (5) dans ladite première zone de la plaque inférieure (2), de sorte qu'un câble est passé avec son axe longitudinal sensiblement orthogonal à un plan de la plaque inférieure (2) à travers le chemin d'ouverture (5) dans l'ouverture (3), dans laquelle ladite seconde zone est différente de ladite première zone, et ladite seconde zone est pourvue d'un moyen (9) pour monter ladite plaque inférieure (2) sur ladite structure de fondation (12), et où ladite seconde zone n'est pas couverte par ladite armoire (1), et ladite armoire(1) est agencée dans une position décalée par rapport à la structure de fondation (12).

2. Armoire d'installation électrique selon la revendication 1, dans laquelle au moins une bride est prévue sur ladite plaque inférieure (2) dans ladite première zone pour fixer et monter ladite armoire (1).

3. Armoire d'installation électrique selon les revendications 1 ou 2, dans laquelle au moins une ouverture d'assemblage (4) est prévue dans ladite seconde zone pour monter ladite plaque inférieure (2) sur ladite structure de fondation (12).

4. Armoire d'installation électrique selon l'une quelconque des revendications précédentes, dans laquelle la seconde zone de ladite plaque inférieure (2) s'étend selon un angle dans la limite de ±90° par rapport audit plan de la première zone de ladite plaque inférieure (2).

5. Armoire d'installation électrique selon l'une quelconque des revendications précédentes, dans laquelle ladite structure de fondation (12) est un pilier.

6. Armoire d'installation électrique selon l'une quelconque des revendications précédentes, dans laquelle ladite armoire (1) est pourvue d'une protection inférieure (8), agencée de sorte que ladite protection inférieure (8) s'étend le long de ladite armoire et au-delà de ladite plaque inférieure (2) dans une direction vers le sol, lorsque ladite armoire (1) et la protection inférieure (8) sont en cours d'utilisation.

7. Procédé d'introduction de câbles électriques dans une armoire d'installation électrique dans un environnement extérieur, dans lequel le procédé comprend les étapes suivantes :
- la fourniture d'une armoire (1) avec un volume interne et une ouverture (6) sur un côté avant avec accès au volume interne, et la fourniture d'une plaque inférieure (2) avec une première zone et une seconde zone avec une ouverture (3) pour une entrée de câble dans ladite première zone, où la plaque inférieure (2) dans ladite première zone a un chemin d'ouverture (5) reliant l'ouverture à un bord libre de la plaque, permettant au câble (13) d'entrer dans ladite ouverture (3) à travers ledit chemin d'ouverture (5) dans ladite première zone de la plaque inférieure (5), de sorte qu'un câble relativement rigide est passé avec son axe longitudinal sensiblement orthogonal à un plan de la plaque inférieure (2) à travers le chemin d'ouverture (5) dans l'ouverture (3), et ladite seconde zone est pourvue d'un moyen (7) pour fixer/monter ladite armoire (1) sur une structure de fondation (12), et la fourniture de ladite structure de fondation (12) avec un moyen (9) pour monter ladite plaque inférieure (2) sur ladite structure de fondation (12),
- l'assemblage de ladite première zone de ladite plaque inférieure (2) à ladite armoire (1) à l'aide d'un moyen de fixation (7) pour la fixation et le montage, où ladite première zone est couverte par ladite armoire (1), et la fourniture de ladite seconde zone qui n'est pas couverte par ladite armoire (1), et le montage de ladite seconde zone de ladite plaque inférieure (2) sur ladite structure de fondation (12) à l'aide d'un moyen (9) pour la fixation et le montage, de sorte que ladite armoire (1) est agencée dans une position décalée par rapport à la structure de fondation (12),
- le fait d'entraîner au moins une extrémité d'un câble électrique (13) depuis le sol, vers le haut et à travers ladite ouverture (3) pour une entrée de câble prévue dans ladite première zone de la plaque inférieure (2), de sorte que le câble électrique (13) est inséré latéralement à travers le chemin d'ouverture sur l'extérieur de la plaque inférieure (2) et dans le volume interne de l'armoire (1).

8. Procédé d'introduction de câbles électriques dans une armoire d'installation électrique selon la revendication 7, fournissant ladite armoire (1) avec une protection inférieure (8), étendant ladite protection inférieure (8) le long de ladite armoire (1), au-delà de la plaque inférieure (2) dans une direction vers le sol, lorsque l'armoire (1) est en cours d'utilisation et la protection inférieure (8) fournit une protection d'entrée desdits câbles électriques (13).
